# EUROPEAN PATENT APPLICATION

(11) **EP 4 550 602 A1**
(43) Date of publication of application: **07.05.2025**
(21) Application number: 24209777.2
(22) Date of filing: 30.10.2024
(51) Int. Cl.: H02J 1/00, H02J 1/10, H02J 7/34, H02J 9/06

(54) **ENERGY STORAGE CONVERTER, AND ENERGY STORAGE SYSTEM**

(30) Priority: 30.10.2023 CN 202311434736
(71) Applicant: Sungrow Power Supply Co., Ltd., Hefei, Anhui 230088 (CN)
(72) Inventor: Dong, Hao, Hefei, 230088 (CN); Deng, Kai, Hefei, 230088 (CN); Li, Le, Hefei, 230088 (CN); Zheng, Feiyang, Hefei, 230088 (CN)
(74) Representative: DREISS Patentanwälte PartG mbB

(57) **Abstract**

An energy storage converter and an energy storage system are provide, the present disclosure relates to the field of energy storage technologies. The energy storage converter includes: a direct current (DC) switching power supply circuit configured to provide a first power supply using DC power from the DC side port; an alternating current (AC) switching power supply circuit configured to provide a second power supply using AC power from the AC side port; a power supply circuit configured to supply power to the energy storage converter using the first power supply or the second power supply; and a control circuit configured to, based on an operation state of the energy storage converter, control the DC switching power supply circuit or the AC switching power supply circuit to provide the power supply circuit with power supply. A power supply mode is selected based on an operation state of the energy storage converter. The DC switching power supply circuit or the AC switching power supply circuit independently supplies power at the same time, thereby reducing the use of a DC power source and reducing the loss of the DC power source.

## Description

### FIELD

The present disclosure relates to the field of energy storage technologies, and more particularly, to an energy storage converter and an energy storage system.

### BACKGROUND

In the existing energy storage converter (also known as Power Conversion System, PCS), the RACK Battery Management System (BMS) Board, the Advanced RISC Machine (ARM) Processor, and the Digital Signal Processor (DSP) need to be continuously powered. The energy storage converter draws power on a direct current (DC) side for a long time, which reduces the available charge remaining in the energy storage battery, discharges the battery, and affects the life of the battery.

### SUMMARY

The present disclosure aims at solving at least one of the technical problems in the related art. To this end, the present disclosure provides an energy storage converter and an energy storage system. A power supply mode is selected based on an operation state of the energy storage converter, and a direct current (DC) switching power supply circuit or an alternating current (AC) switching power supply circuit independently supplies power at the same time, which reduces the loss of a DC power source.

In a first aspect, the present disclosure provides an energy storage converter. The energy storage converter includes: a DC switching power supply circuit coupled to a DC side port of the energy storage converter and configured to provide a first power supply using DC power from the DC side port; an AC switching power supply circuit coupled to an AC side port of the energy storage converter and configured to provide a second power supply using AC power from the AC side port; a power supply circuit coupled to the DC switching power supply circuit and the AC switching power supply circuit, the power supply circuit being configured to supply power to the energy storage converter using the first power supply or the second power supply; and a control circuit coupled to the DC switching power supply circuit and the AC switching power supply circuit, the control circuit being configured to, based on an operation state of the energy storage converter, control the DC switching power supply circuit or the AC switching power supply circuit to provide the power supply circuit with power supply.

According to an embodiment of the present disclosure, the operation state of the energy storage converter includes a shutdown state or a standby state, and the control circuit is configured to, in response to that the energy storage converter is in the shutdown state or the standby state, control the AC switching power supply circuit to provide the power supply circuit with the second power supply.

According to an embodiment of the present disclosure, the operation state of the energy storage converter further includes an off-grid operation state, and the control circuit is configured to, in response to that the energy storage converter is in the off-grid operation state, control the DC switching power supply circuit to provide the power supply circuit with the first power supply.

According to an embodiment of the present disclosure, the operation state of the energy storage converter further includes a grid-connected operation state, and the control circuit is configured to, in response to that the energy storage converter is in the grid-connected operation state, control the DC switching power supply circuit to provide the power supply circuit with the first power supply.

According to an embodiment of the present disclosure, the energy storage converter further includes: a first diode having an anode coupled to an output terminal of the DC switching power supply circuit and a cathode coupled to an input terminal of the power supply circuit; and a second diode having an anode coupled to an output terminal of the AC switching power supply circuit and a cathode coupled to the input terminal of the power supply circuit.

According to an embodiment of the present disclosure, the DC switching power supply circuit is configured to controllably output the first power supply having a first voltage or a second voltage, and the second power supply has a third voltage, the first voltage being smaller than the third voltage, and the second voltage being greater than the third voltage.

According to an embodiment of the present disclosure, the AC switching power supply circuit is configured to controllably output the second power supply having a fourth voltage or a fifth voltage, and the first power supply has a sixth voltage, the fourth voltage being smaller than the sixth voltage, and the fifth voltage being greater than the sixth voltage.

According to an embodiment of the present disclosure, the DC switching power supply circuit and/or the AC switching power supply circuit includes an output voltage regulation circuit. The output voltage regulation circuit includes: a first resistance unit and a second resistance unit that are connected in series, a terminal of the first resistance unit being coupled to an output node of a switching power supply circuit, and a terminal of the second resistance unit being coupled to a ground node; a voltage reference chip connected to the second resistance unit in parallel; a configuration unit connected to the first resistance unit or the second resistance unit in parallel, the configuration unit including a switch and a third resistance unit that are connected in series; and the control circuit configured to control the switch on or off.

According to an embodiment of the present disclosure, the energy storage converter further includes a battery management controller and a processor. The power supply circuit includes a first step-down circuit. The first step-down circuit has an input terminal coupled to the DC switching power supply circuit and the AC switching power supply circuit, and an output terminal coupled to the battery management controller and the processor.

According to an embodiment of the present disclosure, the energy storage converter further includes a digital signal processor. The power supply circuit further includes a second step-down circuit. The second step-down circuit has an input terminal coupled to the DC switching power supply circuit, and an output terminal coupled to the digital signal processor. The DC switching power supply circuit is further configured to provide the second step-down circuit with a third power supply.

According to an embodiment of the present disclosure, the power supply circuit further includes an isolated power supply circuit, the isolated power supply circuit having an input terminal coupled to the output terminal of the first step-down circuit, and an output terminal coupled to the digital signal processor.

In a second aspect, the present disclosure provides an energy storage system. The energy storage system includes at least one energy storage unit and the energy storage converter. A DC side of the energy storage converter is coupled to the energy storage unit.

According to the energy storage converter and the energy storage system of the present disclosure, the power supply mode is selected based on the operation state of the energy storage converter, and the DC switching power supply circuit or the AC switching power supply circuit independently supplies power at the same time, which reduces the loss of the DC power source.

Additional aspects and advantages of the embodiments of the present disclosure will be given at least in part in the following description, or become apparent at least in part from the following description, or can be learned from practicing of the embodiments of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a first schematic diagram showing a structure of an energy storage converter according to an embodiment of the present disclosure.
FIG. 2 is a schematic diagram showing a structure of a DC side of an energy storage converter according to an embodiment of the present disclosure.
FIG. 3 is a second schematic diagram showing a structure of an energy storage converter according to an embodiment of the present disclosure.
FIG. 4 is a schematic diagram showing a structure of an output voltage regulation circuit according to an embodiment of the present disclosure.
FIG. 5 is a third schematic diagram showing a structure of an energy storage converter according to an embodiment of the present disclosure.
FIG. 6 is a fourth schematic diagram showing a structure of an energy storage converter according to an embodiment of the present disclosure.
FIG. 7 is a fifth schematic diagram showing a structure of an energy storage converter according to an embodiment of the present disclosure.

Reference numerals of the accompanying drawings:
DC switching power supply circuit 100; AC switching power supply circuit 200; power supply circuit 300; first step-down circuit 310; second step-down circuit 320; control circuit 400; pre-charge circuit 500; output voltage regulation circuit 600; configuration unit 610; battery management controller 700; processor 800; digital signal processor 900; isolated power supply circuit 1000; main contactor M1; slow-up contactor K1; slow-up resistor Rf; first to third fuses F1 to F3; first to second shunts L1 to L2; load switch Kc; bus capacitor Cbus; first to fourth diodes D1 to D4; first to third resistors R1 to R3; voltage reference chip P; switch K.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the following description of the present disclosure, "circuit" refers to an electrically conductive loop formed by at least one element or sub-circuit through a n electrical connection or an electromagnetic connection. When an element or circuit is to be "coupled" or "connected" to another element or an element/circuit is to be "coupled" or "connected" between two nodes, it may be directly coupled or connected to the other element or there may be an intervening element. The connection between the elements may be physical, logical, or a combination thereof. Conversely, when an element is to be "directly coupled" or "directly connected" to another element, it means that there is no intervening element.

In the description of the present disclosure, terms such as "first", "second", and the like are used only to distinguish between similar objects, rather than implying a particular sequence of the objects. It should be understood that the terms may be interchanged where appropriate, to enable the embodiments of the present disclosure described herein to be implemented in an order other than that illustrated or described herein. Objects distinguished by "first," "second," etc. are generally of one type and do not limit the number of objects. For example, the first object may be one or more. In addition, "and/or" in the description and claims indicates at least one of the connected objects. The character "/" generally indicates that the associated objects before and after the character are in an "or" relationship.

In addition, description with reference to the terms "an embodiment", "some embodiments", "exemplary embodiments", "examples" "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

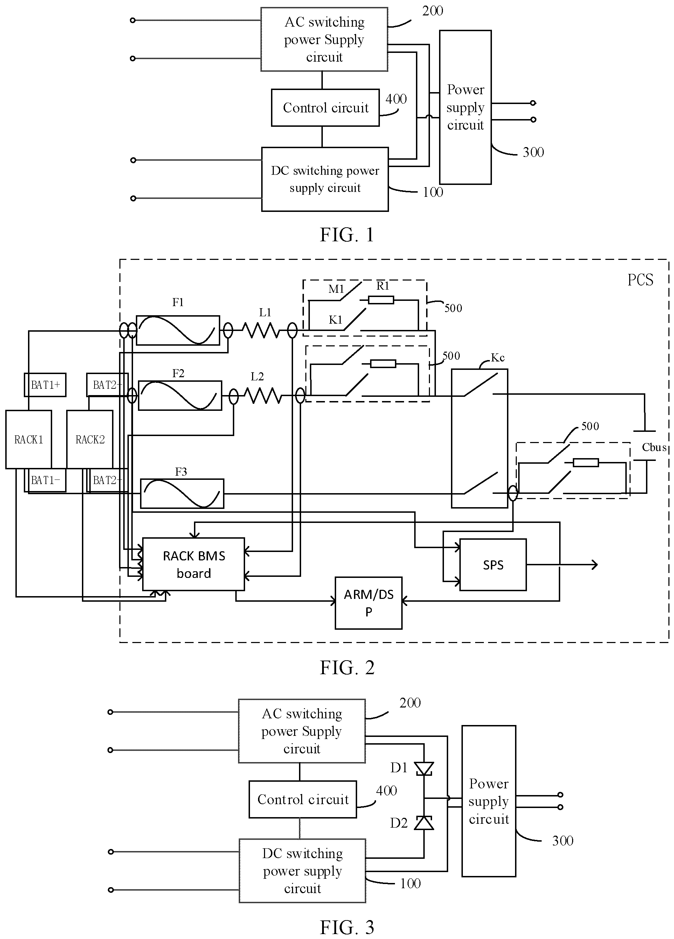

As shown in FIG. 1, an embodiment of the present disclosure provides an energy storage converter. The energy storage converter includes a direct current (DC) switching power supply circuit 100, an alternating current (AC) switching power supply circuit 200, a power supply circuit 300, and a control circuit 400. The DC switching power supply circuit 100 is coupled to a DC side port of the energy storage converter and configured to provide a first power supply using DC power from the DC side port. The AC switching power supply circuit 200 is coupled to an AC side port of the energy storage converter and configured to provide a second power supply using AC power from the AC side port. The power supply circuit 300 is coupled to the DC switching power supply circuit 100 and the AC switching power supply circuit 200, and the power supply circuit 300 is configured to supply power to the energy storage converter using the first power supply or the second power supply. The control circuit 400 is coupled to the DC switching power supply circuit 100 and the AC switching power supply circuit 200, and the control circuit 400 is configured to, based on an operation state of the energy storage converter, control the DC switching power supply circuit 100 or the AC switching power supply circuit 200 to provide the power supply circuit 300 with power supply.

As shown in FIG. 2, in some embodiments, the DC side port of the energy storage converter is coupled to the battery. The DC side of the energy storage converter may include a plurality of pre-charge circuits 500, a first fuse F1, a second fuse F2, a third fuse F3, a first shunt L1, a second shunt L2, a load switch Kc, and a bus capacitor Cbus. The first fuse F1 is coupled to a positive electrode of a battery pack and the first shunt L1. The second fuse F2 is coupled to the positive electrode of the battery pack and the second shunt L2. The third fuse F3 is coupled to a negative electrode of the battery pack. In this way, the circuit is protected from being burned out in case of overcurrent or short circuit.

The pre-charge circuit 500 includes a slow-up contactor K1, a main contactor M1, and a slow-up resistor R1. The pre-charge circuit 500 is disposed at a branch line of a bus and a positive input of the energy storage converter. Therefore, the bus capacitance can be prevented from being broken down due to an excessive instantaneous voltage when the DC side of the energy storage converter is connected to the battery. After pre-charging is completed, the load switch Kc is switched on and the energy storage converter starts to operate.

In some embodiments, the AC side port of the energy storage converter may be provided with a filter and a pre-charge circuit 500, etc. The AC side port is connected to a grid and takes power from the grid for the energy storage converter to operate.

In some embodiments, the DC switching power supply circuit 100 and the AC switching power supply circuit 200 primarily include input filter circuits, full-bridge converters, output filter circuits, and the like. The DC switching power supply circuit 100 may be configured to provide a stable first power supply in response to performing step-down filtering and other processing on DC power input from the DC side of the energy storage converter. The AC switching power supply circuit 200 may be configured to provide a stable second power supply in response to performing step-down filtering and other processing on AC power input from the AC side of the energy storage converter.

In some embodiments, the power supply circuit 300 may include a switching unit, a rectifier circuit, a step-down circuit, and the like. The power supply circuit 300 is configured to convert electric energy transmitted by the DC switching power supply circuit 100 and the AC switching power supply circuit 200 to be supplied to the energy storage converter for use. In response to receiving electric energy of the first power supply provided by the DC switching power supply circuit 100, the electric energy is supplied to the energy storage converter after being subjected to voltage reduction and the like. In response to receiving electric energy of the second power supply provided by the AC switching power supply circuit 200, the electric energy is supplied by the power supply circuit 300 to the energy storage converter after being subjected to rectification and the like. In this way, an alternate power supply is realized, thereby eliminating a continuous need to draw power from the DC side.

In some embodiments, the control circuit 400 mainly includes a pulse width modulation (PWM) control module, a memory, a processor, and the like. The control circuit 400 may control the DC switching power supply circuit 100 and the AC switching power supply circuit 200 to supply power alternately by using the pulse width modulation technology based on the operation state of the energy storage converter.

According to the energy storage converter of the present disclosure, a power supply mode is selected based on the operation state of the energy storage converter. The DC switching power supply circuit 100 or the AC switching power supply circuit 200 independently supplies power at the same time, thereby reducing the use of the DC power source and reducing the loss of the DC power source.

In some embodiments, the operation state of the energy storage converter includes a shutdown state or a standby state. The control circuit 400 is configured to, in response to that the energy storage converter is in the shutdown state or the standby state, control the AC switching power supply circuit 200 to provide the power supply circuit 300 with the second power supply.

In response to that the energy storage converter is in the shutdown state or the standby state, each of units in the energy storage converter is not in a formal operation state, but some of the units require continuous power. In the above state, the energy storage converter still consumes electric energy, but the electric energy consumption is low. The second power supply provided by the AC switching power supply circuit 200 is sufficient to maintain the energy storage converter in the shutdown state or the standby state, at which time the control circuit 400 is configured to control the AC switching power supply circuit 200 to provide the power supply circuit 300 with the second power supply.

In some embodiments, the operation state of the energy storage converter further includes an off-grid operation state. The control circuit 400 is configured to, in response to that the energy storage converter is in the off-grid operation state, control the DC switching power supply circuit 100 to provide the power supply circuit 300 with the first power supply.

In response to that the energy storage converter is in the off-grid operation state, the AC side of the energy storage converter is disconnected from the grid. In this case, the AC switching power supply circuit 200 has no electric energy, and the control circuit 400 is configured to control the DC switching power supply circuit 100 to provide the power supply circuit 300 with the first power supply.

In some embodiments, the operation state of the energy storage converter further includes a grid-connected operation state. The control circuit 400 is configured to, in response to that the energy storage converter is in the grid-connected operation state, control the DC switching power supply circuit 100 to provide the power supply circuit 300 with the first power supply.

In response to that the energy storage converter is in the grid-connected operation state, the AC side of the energy storage converter may draw power from the grid, while the DC switching power supply circuit 100 draws power from the battery. In the grid-connected operation state, each of units of the energy storage system is in a normal operation state, and the electric energy is required to be more. The control circuit 400 is configured to control the DC switching power supply circuit 100 to provide the power supply circuit 300 with the first power supply.

In some embodiments, in response to that the energy storage converter is in the grid-connected operation state, the AC switching power supply circuit 200 may further be utilized to provide the second power supply to the power supply circuit 300. For example, in response to that the battery at the DC side is discharged or the battery at the DC side is insufficient for the normal operation of the energy storage converter, the AC switching power supply circuit 200 may provide the second power supply to the power supply circuit 300.

In some embodiments, as shown in FIG. 3, the energy storage converter further includes a first diode D1 and a second diode D2. The first diode D1 has an anode coupled to an output terminal of the DC switching power supply circuit 100 and a cathode coupled to an input terminal of the power supply circuit 300. The second diode D2 has an anode coupled to an output terminal of the AC switching power supply circuit 200 and a cathode coupled to an input terminal of the power supply circuit 300.

When the energy storage converter operates, since the diode has unidirectional conductivity, the first diode D 1 and the second diode D2 are connected in a common cathode, and a cathode voltage of the two diodes is the same. A diode with an anode voltage higher than a cathode voltage is turned on, and a diode with an anode voltage lower than a cathode voltage is turned off. Therefore, the DC switching power supply circuit 100 or AC switching power supply circuit 200 individually provides power supply to the operation of the energy storage converter at the same time.

When the second diode D2 is turned on and the first diode D1 is turned off, the control circuit 400 is configured to control the AC switching power supply circuit to provide the power supply circuit 300 with the second power supply. When the first diode D1 is turned on and the second diode D2 is turned off, the control circuit 400 is configured to control the DC switching power supply circuit 100 to provide the power supply circuit 300 with the first power supply.

In some embodiments, the DC switching power supply circuit 100 of the energy storage converter is configured to controllably output the first power supply having a first voltage or a second voltage. The second power supply has a third voltage. The first voltage is smaller than the third voltage, and the second voltage is greater than the third voltage.

In response to that the energy storage converter is in the shutdown state, the DC switching power supply circuit 100 of the energy storage converter outputs the first power supply having the first voltage, and the AC switching power supply circuit 200 of the energy storage converter outputs the second power supply having the third voltage. Since the first voltage is smaller than the third voltage, the second diode D2 is turned on and the first diode D1 is turned off. In this case, the AC switching power supply circuit 200 provides the power supply circuit 300 with the second power supply.

In response to that the energy storage converter is in the off-grid operation state, the DC switching power supply circuit 100 of the energy storage converter outputs the first power supply having the second voltage, and the AC switching power supply circuit 200 of the energy storage converter has no electric energy output. The first diode D1 is turned on, and the second diode D2 is turned off. In this case, the DC switching power supply circuit 100 provides the power supply circuit 300 with the first power supply.

In response to that the energy storage converter is in the grid-connected operation state, the DC switching power supply circuit 100 of the energy storage converter outputs the first power supply having the second voltage, and the AC switching power supply circuit 200 of the energy storage converter outputs the second power supply having the third voltage. Since the second voltage is greater than the third voltage, the first diode D1 is turned on, and the second diode D2 is turned off. In this case, the DC switching power supply circuit 100 provides the power supply circuit 300 with the first power supply.

In other embodiments, in response to that the energy storage converter is in the grid-connected operation state, the DC switching power supply circuit 100 of the energy storage converter may further output the first power supply having the first voltage, and the AC switching power supply circuit 200 of the energy storage converter outputs the second power supply having the third voltage. Since the first voltage is smaller than the third voltage, the second diode D2 is turned on and the first diode D1 is turned off. In this case, the AC switching power supply circuit 200 provides the power supply circuit 300 with the second power supply.

In some embodiments, the AC switching power supply circuit 200 of the energy storage converter is configured to controllably output the second power supply having a fourth voltage or a fifth voltage. The first power supply has a sixth voltage. The fourth voltage is smaller than the sixth voltage, and the fifth voltage is greater than the sixth voltage.

In response to that the energy storage converter is in the shutdown state, the DC switching power supply circuit 100 of the energy storage converter outputs the first power supply having the sixth voltage, and the AC switching power supply circuit 200 of the energy storage converter outputs the second power supply having the fifth voltage. Since the fifth voltage is greater than the sixth voltage, the second diode D2 is turned on, and the first diode D1 is turned off. In this case, the AC switching power supply circuit 200 provides the power supply circuit 300 with the second power supply.

In response to that the energy storage converter is in the off-grid operation state, the DC switching power supply circuit 100 of the energy storage converter outputs the first power supply having the sixth voltage, and the AC switching power supply circuit 200 of the energy storage converter has no electric energy output. The first diode D1 is turned on, and the second diode D2 is turned off. In this case, the DC switching power supply circuit 100 provides the power supply circuit 300 with the first power supply.

In response to that the energy storage converter is in the grid-connected operation state, the DC switching power supply circuit 100 of the energy storage converter outputs the first power supply having the sixth voltage, and the AC switching power supply circuit 200 of the energy storage converter outputs the second power supply having the fourth voltage. Since the fourth voltage is smaller than the sixth voltage, the first diode D1 is turned on, and the second diode D2 is turned off. In this case, the DC switching power supply circuit 100 provides the power supply circuit 300 with the first power supply.

In other embodiments, in response to that the energy storage converter is in the grid-connected operation state, the DC switching power supply circuit 100 of the energy storage converter may also output a first power supply having a sixth voltage, the AC switching power supply circuit 200 of the energy storage converter outputs a second power supply having a fifth voltage, and since the fifth voltage is greater than the sixth voltage, the second diode D2 is turned on and the first diode D1 is turned off. In this case, the AC switching power supply circuit 200 provides the power supply circuit 300 with the second power supply.

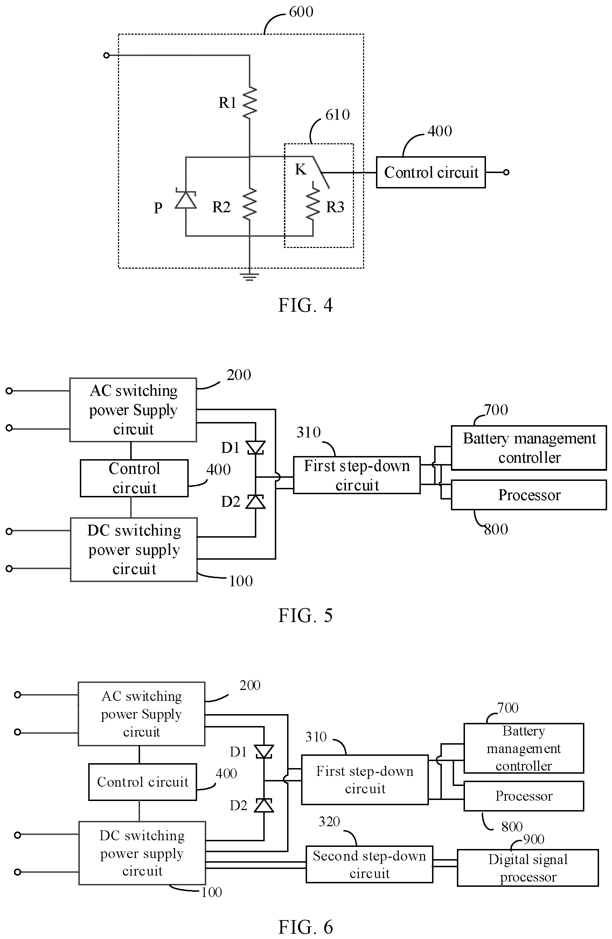

In some embodiments, as shown in FIG. 4, the DC switching power supply circuit 100 and/or AC switching power supply circuit 200 of the energy storage converter includes an output voltage regulation circuit 600. The output voltage regulation circuit 600 includes a first resistance unit and a second resistance unit that are connected in series, a voltage reference chip P, a configuration unit 610, and a control circuit 400. A terminal of the first resistance unit is coupled to an output node of a switching power supply circuit. A terminal of the second resistance unit is coupled to a ground node. The voltage reference chip P is connected to the second resistance unit in parallel. The configuration unit 610 is connected to the first resistance unit or the second resistance unit in parallel, and the configuration unit 610 includes a switch K and a third resistance unit that are connected in series. The control circuit 400 is configured to control the switch on or off.

Each of the first resistance unit, the second resistance unit, and the third resistance unit may include one or more resistors connected in series. In this embodiment, the first resistance unit includes a first resistor R1. The second resistance unit includes a second resistor R2. The third resistance unit includes a third resistor R3.

The output voltage regulation circuit 600 is configured to regulate a voltage provided by the DC switching power supply circuit 100 and/or the AC switching power supply circuit 200 mainly by using a principle of series resistance voltage division. For example, when the DC switching power supply circuit 100 of the energy storage converter is configured to controllably output the first power supply having the first voltage or the second voltage, the output voltage regulation circuit 600 is configured to control the first power supply to selectively output at the first voltage and the second voltage by controlling the resistance of an access circuit.

The first resistor R1 and the second resistor R2 are connected in series. A voltage at two ends of the first resistor R1 and the second resistor R2 is proportional to the resistance of the resistance unit. When the voltage at the two ends of the first resistor R1 or the second resistor R2 is fixed, an output voltage can be adjusted by adjusting the resistance of the first resistor R1 or the second resistor R2.

In some embodiments, the resistance of the first resistor R1 and the second resistor R2 may be fixed. An output voltage can be adjusted by adjusting the voltage at the two ends of the first resistor R1 or the second resistor R2.

The voltage reference chip P is mainly used to provide a constant voltage for the second resistor R2 to ensure that the voltage at the two ends of the second resistor R2 is fixed. In this case, by adjusting the resistance of the first resistor R1 or the second resistor R2, a ratio between the resistance of the first resistor R1 and the resistance of the second resistor R2 where the first resistor R1 and the second resistor R2 are connected in series, can be changed. In this way, the voltage at the two ends of the first resistor R1 can be changed to realize the adjustment of the output voltage.

The configuration unit 610 includes a switch and a third resistor R3 that are connected in series. When the configuration unit 610 is connected to the first resistor R1 in parallel and the switch is switched on, the third resistor R3 is connected to the output voltage regulation circuit 600 and connected to the first resistor R1 in parallel to change the resistance of the first resistor R1. An effect of the configuration unit 610 connected to the second resistor R2 in parallel is similar to that described above and will not be described here.

The control circuit 400 is further configured to determine whether to connect the third resistor R3 to the output voltage regulation circuit 600 by controlling the switch K to be switched on or off, and further configured to control the output voltage of the output voltage regulation circuit 600.

For example, the control circuit 400 is configured to control the DC switching power supply circuit 100 to output an adjustable first voltage of 20V and an adjustable second voltage of 24V, and a reference voltage of the voltage reference chip P is 2.5V. When the control circuit 400 is configured to control the switch K to be switched off, the DC switching power supply circuit 100 outputs a voltage Vout 1 =2.5*(R1+R2)/R2= 20V When the control circuit 400 is configured to control the switch K to be switched on, the DC switching power supply circuit 100 outputs a voltage Vout 2 =2.5*(R1+R2//R3)/(R2//R3)=24V In this way, an adjustable voltage output is realized.

In some embodiments, as shown in FIG. 5, the energy storage converter further includes a battery management controller 700 and a processor 800. The power supply circuit 300 includes a first step-down circuit 310. The first step-down circuit 310 has an input terminal coupled to the DC switching power supply circuit 100 and the AC switching power supply circuit 200, and an output terminal coupled to the battery management controller 700 and the processor 800.

The battery management controller 700 is mainly configured to monitor a state of the battery to prevent overcharge and overdischarge of the battery, which allows for longer battery life and the battery management controller 700 to always be in a powered state.

The processor 800 may be an advanced RISC machine (ARM) processor or a CPU processor. The processor 800 integrates functional modules such as a memory and a communication interface, which can realize functions such as monitoring, controlling, and communicating for the energy storage converter. In addition, the processor 800 has an efficient energy management method that allows for a longer battery life and the processor 800 to always be in a powered state.

The first step-down circuit 310 is configured to receive electric energy transmitted by the DC switching power supply circuit 100 or the AC switching power supply circuit 200. After a voltage reduction process, the electric energy is transferred to internal modules such as battery management controller 700.

Each of the DC switching power supply circuit 100 and the AC switching power supply circuit 200 transmits a substantially insulated voltage to the first step-down circuit 310, which enables protection of the circuit from contact with energized components.

In some embodiments, as shown in FIG. 6, the energy storage converter further includes a digital signal processor 900. The power supply circuit 300 further includes a second step-down circuit 320. The second step-down circuit 320 has an input terminal coupled to the DC switching power supply circuit 100, and an output terminal coupled to the digital signal processor 900. The DC switching power supply circuit 100 is further configured to provide the second step-down circuit 320 with a third power supply.

The digital signal processor 900 is configured to receive an external input analog signal, and convert the signal into a digital signal (0 or 1). Then, the digital signal processor 900 is further configured to perform arithmetic processing on the digital signal. Since the running speed is high, and the digital signal processor 900 needs to be always in a powered state.

The second step-down circuit 320 is configured to receive the third power supply provided by the DC switching power supply circuit 100, and transmit electric energy to the digital signal processor 900 after performing voltage reduction on the third power supply.

The third power supply is configured to provide a voltage of functional insulation to the DC switching power supply circuit 100. The functional insulation can achieve insulation between conductive components of the circuit.

In some embodiments, the DC switching power supply circuit 100 is configured to provide a functional isolation voltage of 12V, and after processing by the second step-down circuit 320, may output a functional isolation voltage of 5V to the digital signal processor 900.

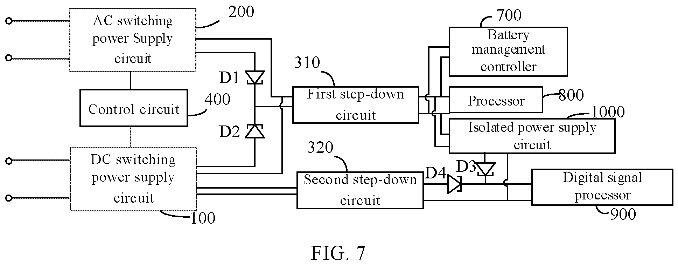

In some embodiments, as shown in FIG. 7, the power supply circuit 300 of the energy storage converter further includes an isolated power supply circuit 1000. The isolated power supply circuit 1000 has an input terminal coupled to the output terminal of the first step-down circuit 310, and an output terminal coupled to the digital signal processor 900.

The isolated power supply circuit 1000 utilizes a third diode D3 and a fourth diode D4 to isolate the input terminal from the output terminal, thereby achieving electrical isolation between the input terminal and the output terminal and providing a stable and reliable output voltage. In addition, the isolated power supply circuit 1000 can further monitor and protect against abnormal conditions such as overvoltage, overcurrent, and overtemperature of the energy storage converter to ensure a safe operation of the energy storage system.

According to an embodiment of the present disclosure, an energy storage system is provided. The energy storage system includes at least one energy storage unit and the energy storage converter. A DC side of the energy storage converter is coupled to the energy storage unit.

According to the energy storage system of the present disclosure, a power supply mode is selected based on the operation state of the energy storage converter. The DC switching power supply circuit 100 or the AC switching power supply circuit 200 independently supplies power at the same time, thereby reducing the use of the DC power source and reducing the loss of the DC power source.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. An energy storage converter, comprising:
a direct current (DC) switching power supply circuit (100) coupled to a DC side port of the energy storage converter and configured to provide a first power supply using DC power from the DC side port;
an alternating current (AC) switching power supply circuit (200) coupled to an AC side port of the energy storage converter and configured to provide a second power supply using AC power from the AC side port;
a power supply circuit (300) coupled to the DC switching power supply circuit (100) and the AC switching power supply circuit (200), the power supply circuit (300) being configured to supply power to the energy storage converter using the first power supply or the second power supply; and
a control circuit (400) coupled to the DC switching power supply circuit (100) and the AC switching power supply circuit (200), the control circuit (400) being configured to, based on an operation state of the energy storage converter, control the DC switching power supply circuit (100) or the AC switching power supply circuit (200) to provide the power supply circuit (300) with power supply.

2. The energy storage converter according to claim 1, wherein:
the operation state comprises a shutdown state or a standby state; and
the control circuit (400) is configured to, in response to that the energy storage converter is in the shutdown state or the standby state, control the AC switching power supply circuit (200) to provide the power supply circuit (300) with the second power supply.

3. The energy storage converter according to claim 2, wherein:
the operation state further comprises an off-grid operation state; and
the control circuit (400) is configured to, in response to that the energy storage converter is in the off-grid operation state, control the DC switching power supply circuit (100) to provide the power supply circuit (300) with the first power supply.

4. The energy storage converter according to claim 3, wherein:
the operation state further comprises a grid-connected operation state; and
the control circuit (400) is configured to, in response to that the energy storage converter is in the grid-connected operation state, control the DC switching power supply circuit (100) to provide the power supply circuit (300) with the first power supply.

5. The energy storage converter according to any one of claims 1 to 4, further comprising:
a first diode having an anode coupled to an output terminal of the DC switching power supply circuit (100) and a cathode coupled to an input terminal of the power supply circuit (300); and
a second diode having an anode coupled to an output terminal of the AC switching power supply circuit (200) and a cathode coupled to the input terminal of the power supply circuit (300).

6. The energy storage converter according to claim 5, wherein:
the DC switching power supply circuit (100) is configured to controllably output the first power supply having a first voltage or a second voltage; and
the second power supply has a third voltage, the first voltage being smaller than the third voltage, and the second voltage being greater than the third voltage.

7. The energy storage converter according to claim 5, wherein:
the AC switching power supply circuit (200) is configured to controllably output the second power supply having a fourth voltage or a fifth voltage; and
the first power supply has a sixth voltage, the fourth voltage being smaller than the sixth voltage, and the fifth voltage being greater than the sixth voltage.

8. The energy storage converter according to claim 5, wherein the DC switching power supply circuit (100) and/or the AC switching power supply circuit (200) comprises an output voltage regulation circuit (600), the output voltage regulation circuit (600) comprising:
a first resistance unit and a second resistance unit that are connected in series, a terminal of the first resistance unit being coupled to an output node of the DC switching power supply circuit (100) and/or the AC switching power supply circuit (200), and a terminal of the second resistance unit being coupled to a ground node;
a voltage reference chip connected to the second resistance unit in parallel;
a configuration unit (610) connected to the first resistance unit or the second resistance unit in parallel, and the configuration unit (610) comprising a switch and a third resistance unit that are connected in series; and
the control circuit (400) configured to control the switch on or off.

9. The energy storage converter according to any one of claims 1 to 4, further comprising a battery management controller (700) and a processor (800), wherein:
the power supply circuit (300) comprises a first step-down circuit (310); and
the first step-down circuit (310) has an input terminal coupled to the DC switching power supply circuit (100) and the AC switching power supply circuit (200), and an output terminal coupled to the battery management controller (700) and the processor (800).

10. The energy storage converter according to claim 9, further comprising a digital signal processor (900), wherein:
the power supply circuit (300) further comprises a second step-down circuit (320);
the second step-down circuit (320) has an input terminal coupled to the DC switching power supply circuit (100), and an output terminal coupled to the digital signal processor (900); and
the DC switching power supply circuit (100) is further configured to provide the second step-down circuit (320) with a third power supply.

11. The energy storage converter according to claim 10, wherein the power supply circuit (300) further comprises an isolated power supply circuit (1000), the isolated power supply circuit (1000) having an input terminal coupled to the output terminal of the first step-down circuit (310), and an output terminal coupled to the digital signal processor (900).

12. An energy storage system, comprising:
at least one energy storage unit; and
the energy storage converter according to any one of claims 1 to 11, wherein a DC side of the energy storage converter is coupled to the energy storage unit.
